# EUROPEAN PATENT APPLICATION

(11) **EP 3 582 543 A1**
(43) Date of publication of application: **18.12.2019**
(21) Application number: 17901557.3
(22) Date of filing: 20.03.2017
(51) Int. Cl.: H04W 28/10

(54) **AMBR DETERMINATION METHOD, AND COMMUNICATION ENTITY**

(71) Applicant: Huawei Technologies Co., Ltd., Longgang District Shenzhen, Guangdong 518129 (CN)
(72) Inventor: WU, Yizhuang, Shenzhen Guangdong 518129 (CN)
(74) Representative: Goddar, Heinz J.
(86) International application number: PCT/CN2017/077338
(87) International publication number: WO 2018/170687

(57) **Abstract**

This application relates to the field of communications technologies, and in particular, to an AMBR determining method and a communications entity, to determine an AMBR in 5G communication. According to embodiments of this application, a communications entity may obtain an authorized session AMBR of a session of UE, obtain a subscribed UE AMBR of the UE, and determine an authorized UE AMBR of the UE based on the obtained authorized session AMBR and subscribed UE AMBR. In this way, determining of an authorized UE AMBR in 5G communication may be implemented.

## Description

### TECHNICAL FIELD

This application relates to the field of communications technologies, and in particular, to an AMBR determining method and a communications entity.

### BACKGROUND

In an evolved packet system (English: Evolved Packet System, EPS for short) network, EPS bearer-based QoS control is proposed to control quality of service (English: Quality of service, QoS for short) of a service. The EPS bearer is a group of aggregated packet data flows using same QoS processing (to be specific, using a same QoS parameter for control). The EPS network supports a guaranteed bit rate (English: Guaranteed Bit Rate, GBR for short) EPS bearer and a non-GBR EPS bearer.

For the non-GBR EPS bearer, an authorized UE AMBR of UE may be determined based on an authorized access point name (English: Access Point Name, APN for short) maximum bit rate (English: Aggregate Maximum Bit Rate, AMBR) and a subscribed UE AMBR. The authorized APN AMBR may be used to limit aggregate bit rates of all non-GBR bearers on all packet data network (packet data network, PDN) connections of a same APN. The subscribed UE AMBR may be an aggregate maximum bit rate that is subscribed for UE and that is of all non-GBR EPS bearers of the UE.

When the UE establishes a plurality of packet data network (English: Packet Data network, PDN for short) connections to the EPS network, there is only one mobility management entity (English: Mobility Management Entity, MME for short) for the UE to manage all sessions. Therefore, the MME determines an authorized UE AMBR based on the foregoing parameters, and the authorized UE AMBR may be used to limit aggregate bit rates of all non-GBR bearers of the UE on all PDN connections of all APNs.

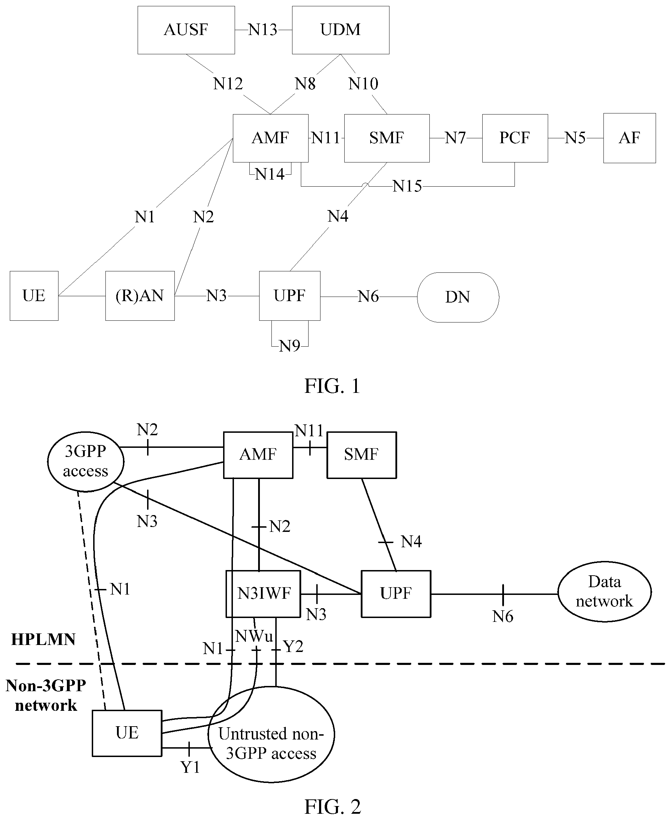

The following describes entities and functions thereof in a 3rd generation partnership project (English: 3rd Generation Partnership Project, 3GPP for short)-defined 5G architecture of a 3GPP scenario (shown in FIG. 1) and those in a defined 5G architecture of a non-3GPP scenario (shown in FIG. 2).

Access and mobility management function entity (English: Access and Mobility Management Function, AMF for short): Main functions include user registration management, accessibility detection, SMF entity selection, mobile state transition management, and the like.

Session management function (English: Session Management Function, SMF for short) entity: mainly responsible for controlling session establishment, modification, deletion, activation, and deactivation, user-plane node selection, and the like.

Policy control function (English: Policy Control Function, PCF for short) entity: mainly responsible for making policy decisions and providing rules for service data flow-based and application-based detection, gating control, QoS, flow-based charging control, and the like.

Access network (English: Access Network, AN for short) node: mainly responsible for providing a wireless connection.

Unified data management (English: Unified Data Management, UDM for short) entity: mainly responsible for storage and management of user data.

Based on the foregoing 5G architectures, a QoS flow (flow)-based QoS control mechanism is proposed. The QoS flow is a minimum QoS differentiation granularity in a PDU session, that is, same QoS processing is performed for services of a same QoS flow. 5G supports GBR QoS flows and non-GBR QoS flows. A bit rate of each GBR QoS flow is controlled independently, but bit rates of the non-GBR QoS flows may be controlled in a centralized manner, that is, controlled by using an aggregate maximum bit rate AMBR.

In the 5G architectures, one UE may establish a plurality of concurrent packet data unit (packet data unit, PDU) sessions (session) with a network, and different PDU sessions may be controlled by one or more SMF entities. Therefore, the prior art cannot be used to determine an authorized UE AMBR of the UE in a 5G communications system, and a further solution is to be provided.

### SUMMARY

This application provides an AMBR determining method and a communications entity, to determine an authorized UE AMBR of UE in a 5G communications system.

According to a first aspect, an embodiment of this application provides an AMBR determining method, including:
obtaining, by a communications entity, an authorized session AMBR of a session of user equipment UE and a subscribed UE AMBR of the UE, where the session is in an active state; and
determining, by the communications entity, an authorized UE AMBR of the UE based on the authorized session AMBR and the subscribed UE AMBR.

According to this embodiment of this application, the communications entity may obtain the authorized session AMBR of the session of the UE (which may also be referred to as a session AMBR of the session of the UE), obtain the subscribed UE AMBR of the UE, and determine the authorized UE AMBR of the UE based on the obtained authorized session AMBR and subscribed UE AMBR. In this way, determining of an authorized UE AMBR in 5G communication may be implemented.

With reference to the first aspect, in a first possible implementation of the first aspect, the obtaining, by a communications entity, an authorized session AMBR of a session of UE includes:
receiving, by the communications entity, a session establishment message, where the session establishment message carries the authorized session AMBR of the session; or
receiving, by the communications entity, a first session modification message, where the first session modification message carries the authorized session AMBR of the session; or
receiving, by the communications entity, a session activation message, where the session activation message carries the authorized session AMBR of the session; or
obtaining, by the communications entity, the authorized session AMBR of the session of the UE locally.

The foregoing embodiment provides a plurality of manners for obtaining the authorized session AMBR of the session of the UE. In other words, different application scenarios correspond to different obtaining manners. Specifically, the authorized session AMBR of the session of the UE is obtained by using the session establishment message during session establishment, obtained by using the session modification message during session modification, and obtained by using the session activation message during session activation, and may alternatively be obtained locally from the communications entity. The obtaining manners may be applicable to the plurality of application scenarios.

With reference to the first aspect or the first possible implementation of the first aspect, in a second possible implementation of the first aspect, the obtaining, by a communications entity, a subscribed UE AMBR of the UE includes:
obtaining, by the communications entity, the subscribed UE AMBR of the UE locally; or
receiving, by the communications entity, a second session modification message, where the second session modification message carries the subscribed UE AMBR of the UE; or
obtaining, by the communications entity, the subscribed UE AMBR of the UE from an access and mobility management function AMF entity or a unified data management UDM entity.

The foregoing embodiment provides a plurality of manners for obtaining the subscribed UE AMBR of the UE. In other words, different application scenarios correspond to different obtaining manners. Specifically, the subscribed UE AMBR of the UE is obtained by using the session modification message during session modification, may alternatively be obtained locally from the communications entity, and may alternatively be obtained from the UDM or the AMF entity. The obtaining manners may be applicable to the plurality of application scenarios.

With reference to the first aspect, in a third possible implementation of the first aspect, before the obtaining, by a communications entity, an authorized session AMBR of a session of UE and a subscribed UE AMBR of the UE, the method further includes:
receiving, by the communications entity, a session deletion message or a session deactivation message; and
the obtaining, by a communications entity, an authorized session AMBR of a session of UE and a subscribed UE AMBR of the UE includes:
   obtaining, by the communications entity, the authorized session AMBR of the session of the UE and the subscribed UE AMBR of the UE locally.

The foregoing embodiment provides another two scenarios of obtaining the authorized session AMBR of the session of the UE and the subscribed UE AMBR of the UE. To be specific, when receiving the session deletion message or the session deactivation message, the communications entity may obtain the authorized session AMBR of the session of the UE and the subscribed UE AMBR of the UE locally.

With reference to the first aspect, or the first possible implementation of the first aspect to the third possible implementation of the first aspect, in a fourth possible implementation of the first aspect, the communications entity is UE, an AN node, an AMF entity, a PCF entity, or a non-3GPP interworking function (English: Non 3GPP Interworking Function, N3IWF for short) entity.

According to the foregoing embodiment, the communications entity may be UE, an AN node, an N3IWF entity, an AMF entity, or a PCF entity. A plurality of execution bodies for determining the authorized UE AMBR of the UE are provided, and therefore implementation is more flexible.

With reference to the fourth possible implementation of the first aspect, in a fifth possible implementation of the first aspect, when the communications entity is UE, an AMF entity, or a PCF entity, the method further includes:
sending, by the communications entity, the authorized UE AMBR of the UE to an AN node or an N3IWF entity.

With reference to the first aspect, or the first possible implementation of the first aspect to the fifth possible implementation of the first aspect, in a sixth possible implementation of the first aspect, the subscribed UE AMBR of the UE is a subscribed UE AMBR corresponding to an access technology type of the session.

In this embodiment, access technology types of PDU sessions of UE are classified based on an application scenario. For example, the access technology types may be classified into 5G radio access network (English: Radio Access Network, RAN for short)-based access and 5G non-3GPP access (for example, 5G non-3GPP access includes wireless fidelity (English: Wireless Fidelity, Wi-Fi for short) access or the like). A PDU session corresponds to a subscribed UE AMBR based on each access technology type. Therefore, when using the subscribed UE AMBR to determine the authorized UE AMBR, the communications entity may select and use the corresponding subscribed UE AMBR based on the access technology type of the PDU session, to determine the authorized UE AMBR. For example, if the access technology type of the PDU session is 5G RAN access, a subscribed UE AMBR corresponding to 5G RAN access is selected; and if the access technology type of the PDU session is non-3GPP access, a subscribed UE AMBR corresponding to 5G non-3GPP access is selected.

According to a second aspect, an embodiment of this application provides a communications entity, and the communications entity may implement any AMBR determining method provided in the first aspect.

In a possible design, the communications entity includes a plurality of functional modules that are configured to implement any AMBR determining method provided in the first aspect, so that the communications entity may obtain an authorized session AMBR of a session of UE and obtain a subscribed UE AMBR of the UE, and determine an authorized UE AMBR of the UE based on the obtained authorized session AMBR and subscribed UE AMBR. In this way, determining of an authorized UE AMBR in 5G communication may be implemented, and a problem that an authorized UE AMBR cannot be determined in 5G communication is resolved.

In a possible design, a structure of the communications entity includes a processor and a transceiver. The processor is configured to support the communications entity in performing corresponding functions in the AMBR determining method in the first aspect. The transceiver is configured to: support communication between the communications entity and another entity, and send, to the another entity, or receive, from the another entity, information or an instruction related to the foregoing AMBR determining methods. The communications entity may further include a memory. The memory is configured to be coupled to the processor, and the memory stores a program instruction and data that are required by the communications entity.

According to a third aspect, an embodiment of this application provides an AMBR determining method, including:
receiving, by an SMF entity, a subscribed session AMBR of a session of UE from a UDM entity;
determining, by the SMF entity, an authorized session AMBR of the session based on the subscribed session AMBR of the session; and
sending, by the SMF entity, the authorized session AMBR of the session to a communications entity.

According to the foregoing embodiment, the SMF entity determines the authorized session AMBR of the session based on the subscribed session AMBR, of the session of the UE, received from the UDM entity, and sends the authorized session AMBR of the session to the communications entity. The communications entity determines an authorized UE AMBR of the UE based on the received authorized session AMBR of the session. In this way, determining of an authorized UE AMBR in 5G communication may be implemented.

With reference to the third aspect, in a first possible implementation of the third aspect, the determining, by the SMF entity, an authorized session AMBR of the session based on the subscribed session AMBR of the session includes:
determining, by the SMF entity, the authorized session AMBR of the session based on an authorization policy and the subscribed session AMBR of the session, where the authorization policy is a local authorization policy or an authorization policy obtained from a PCF entity; or
sending, by the SMF entity, the subscribed session AMBR of the session to a PCF entity, and receiving the authorized session AMBR, of the session, sent by the PCF entity, where the authorized session AMBR of the session is determined by the PCF based on an authorization policy and the subscribed session AMBR of the session.

With reference to the third aspect or the first possible implementation of the third aspect, in a second possible implementation of the third aspect, the communications entity is UE, an AN node, an AMF entity, a PCF entity, or an N3IWF entity.

According to the foregoing embodiment, the communications entity may be UE, an AN node, an N3IWF entity, an AMF entity, or a PCF entity. A plurality of execution bodies for determining the authorized UE AMBR of the UE are provided, and therefore implementation is more flexible.

According to a fourth aspect, an embodiment of this application provides an SMF entity, and the SMF entity may implement any AMBR determining method provided in the third aspect.

In a possible design, a communications entity includes a plurality of functional modules that are configured to implement any AMBR determining method provided in the third aspect, so that the SMF entity determines an authorized session AMBR of a session based on a subscribed session AMBR, of the session of UE, received from a UDM entity, and sends the authorized session AMBR of the session to the communications entity. The communications entity determines an authorized UE AMBR of the UE based on the received authorized session AMBR of the session. In this way, determining of an authorized UE AMBR in 5G communication may be implemented.

In a possible design, a structure of the communications entity includes a processor and a transceiver. The processor is configured to support the communications entity in performing corresponding functions in the AMBR determining method in the third aspect. The transceiver is configured to: support communication between the SMF entity and another entity, and send, to the another entity, or receive, from the another entity, information or an instruction related to the foregoing AMBR determining methods. The SMF entity may further include a memory. The memory is configured to be coupled to the processor, and the memory stores a program instruction and data that are required by the communications entity.

According to a fifth aspect, an embodiment of this application provides an AMBR determining method, including:
receiving, by a PCF entity, a subscribed session AMBR of a session of UE;
determining, by the PCF entity, an authorized session AMBR of the session based on an authorization policy and the subscribed session AMBR of the session; and
sending, by the PCF entity, the authorized session AMBR of the session to a communications entity.

According to the foregoing embodiment, the PCF entity determines the authorized session AMBR of the session based on the authorization policy and the received subscribed session AMBR of the session of the UE, and sends the authorized session AMBR of the session to the communications entity. The communications entity determines an authorized UE AMBR of the UE based on the received authorized session AMBR of the session. In this way, determining of an authorized UE AMBR in 5G communication may be implemented.

With reference to the fifth aspect, in a first possible implementation of the fifth aspect, the communications entity is UE, an AN node, an AMF entity, or an N3IWF entity.

According to the foregoing embodiment, the communications entity may be UE, an AN node, an N3IWF entity, or an AMF entity. A plurality of execution bodies for determining the authorized UE AMBR of the UE are provided, and therefore implementation is more flexible.

According to a sixth aspect, an embodiment of this application provides a PCF entity, and the PCF entity may implement any AMBR determining method provided in the fifth aspect.

In a possible design, the communications entity includes a plurality of functional modules that are configured to implement any AMBR determining method provided in the fifth aspect, so that the PCF entity determines an authorized session AMBR of a session based on an authorization policy and a received subscribed session AMBR of the session of UE, and sends the authorized session AMBR of the session to the communications entity. The communications entity determines an authorized UE AMBR of the UE based on the received authorized session AMBR of the session. In this way, determining of an authorized UE AMBR in 5G communication may be implemented, and a problem that an authorized UE AMBR cannot be determined in 5G communication is resolved.

In a possible design, a structure of the communications entity includes a processor and a transceiver. The processor is configured to support the communications entity in performing corresponding functions in the AMBR determining method in the fifth aspect. The transceiver is configured to: support communication between the PCF entity and another entity, and send, to the another entity, or receive, from the another entity, information or an instruction related to the foregoing AMBR determining methods. The PCF entity may further include a memory. The memory is configured to be coupled to the processor, and the memory stores a program instruction and data that are required by the communications entity.

According to a seventh aspect, an embodiment of this application provides a computer storage medium, configured to store a computer software instruction used by the communications entity provided in the second aspect. The computer storage medium includes a program designed to perform the method in the first aspect.

According to an eighth aspect, this application further provides a computer program product that includes an instruction. When the computer program product is run on a computer, the computer is enabled to perform the method in the first aspect.

According to a ninth aspect, an embodiment of this application provides a computer storage medium, configured to store a computer software instruction used by the SMF entity provided in the fourth aspect. The computer storage medium includes a program designed to perform the method in the third aspect.

According to a tenth aspect, this application further provides a computer program product that includes an instruction. When the computer program product is run on a computer, the computer is enabled to perform the method in the third aspect.

According to an eleventh aspect, an embodiment of this application provides a computer storage medium, configured to store a computer software instruction used by the PCF entity provided in the sixth aspect. The computer storage medium includes a program designed to perform the method in the fifth aspect.

According to a twelfth aspect, this application further provides a computer program product that includes an instruction. When the computer program product is run on a computer, the computer is enabled to perform the method in the fifth aspect.

### BRIEF DESCRIPTION OF DRAWINGS

FIG. 1 is a schematic diagram of a 5G architecture in a 3GPP scenario according to this application;
FIG. 2 is a schematic diagram of a 5G architecture in a non-3GPP scenario according to this application;
FIG. 3 is a flowchart of an AMBR determining method according to an embodiment of this application;
FIG. 4 is a flowchart of another AMBR determining method according to an embodiment of this application;
FIG. 5 is a flowchart of another AMBR determining method according to an embodiment of this application;
FIG. 6 is a schematic diagram of a 5G architecture in which an AN node determines an authorized UE AMBR according to an embodiment of this application;
FIG. 7 shows a detailed procedure for determining an AMBR when a communications entity is an AN node according to an embodiment of this application;
FIG. 8 is a schematic diagram of a 5G architecture in which UE determines an authorized UE AMBR according to an embodiment of this application;
FIG. 9 shows a detailed procedure for determining an AMBR when a communications entity is UE according to an embodiment of this application;
FIG. 10 is a schematic diagram of a 5G architecture in which an AMF entity determines an authorized UE AMBR according to an embodiment of this application;
FIG. 11 shows a detailed procedure for determining an AMBR when a communications entity is an AMF entity according to an embodiment of this application;
FIG. 12 is a schematic diagram of a 5G architecture in which a PCF entity determines an authorized UE AMBR according to an embodiment of this application;
FIG. 13 shows a detailed procedure for determining an AMBR when a communications entity is a PCF entity according to an embodiment of this application;
FIG. 14 is a schematic diagram of a communications entity according to an embodiment of this application;
FIG. 15 is a schematic diagram of a base station according to an embodiment of this application;
FIG. 16 is a schematic diagram of UE according to an embodiment of this application;
FIG. 17 is a schematic diagram of a communications entity according to an embodiment of this application;
FIG. 18 is a schematic diagram of an SMF entity according to an embodiment of this application; and
FIG. 19 is a schematic diagram of a PCF entity according to an embodiment of this application.

### DESCRIPTION OF EMBODIMENTS

The following further describes embodiments of this application in detail with reference to the accompanying drawings.

The embodiments of this application may be applied to a 5G (5th generation) system, for example, an access network using a new radio access technology (new radio access technology, New RAT), a CRAN (Cloud Radio Access Network, cloud radio access network), or another communications system; or may be used in a future communications system above 5G.

FIG. 1 and FIG. 2 are schematic diagrams of application scenarios applicable to this application. FIG. 1 is a schematic diagram of an applicable 3GPP scenario, and FIG. 2 is a schematic diagram of an applicable non-3GPP scenario. Network architectures and service scenarios that are described in the embodiments of the present invention are used to describe the technical solutions in the embodiments of the present invention more clearly, but do not limit the technical solutions provided in the embodiments of the present invention. A person of ordinary skill in the art may know that the technical solutions provided in the embodiments of the present invention are also applicable to a similar technical problem as the network architecture evolves and a new service scenario appears.

The following describes, with reference to a system architecture shown in FIG. 1, nouns, terms, or functions of functional entities in the embodiments of this application.

The system architecture shown in FIG. 1 is used as an example. When UE accesses a 5G network and obtains a data network (English: Data Network, DN for short) service, the UE may establish a plurality of PDU sessions simultaneously. Each PDU session corresponds to a subscribed session AMBR (Session AMBR for short, or referred to as a PDU AMBR), and the subscribed session AMBR is stored in a UDM entity. For example, the UDM entity stores subscription information of the UE, including one or more subscribed UE AMBRs of the UE, and a subscribed session AMBR of one or more sessions of the UE.

A session AMBR is based on a session. For example, the session AMBR may be a maximum aggregate bit rate of all non-GBR QoS flows of a particular PDU session. For downlink transmission, session AMBR control may be performed on a user plane function (English: User Plane function, UPF for short) entity. For uplink transmission, session AMBR control may be performed on UE, and then session AMBR verification is performed on a UPF entity.

It should be noted that access technology types of sessions of the UE may be classified based on an application scenario. For example, the access technology types may be classified into 5G RAN-based access and 5G non-3GPP access (for example, 5G non-3GPP access includes Wi-Fi access or the like). A PDU session may correspond to a subscribed session AMBR based on each access technology type. In other words, sessions of different access technology types may have different subscribed session AMBRs. Alternatively, all PDU sessions of the UE use a same subscribed session AMBR.

In addition, the subscribed UE AMBR may be an aggregate maximum bit rate that is subscribed for UE and that is of all non-GBR QoS flows of the UE. The subscribed UE AMBR may also be differentiated based on an access technology type. For example, different access technology types may correspond to different subscribed UE AMBRs. Apparently, a same subscribed UE AMBR or a sum of subscribed UE AMBRs of access technology types is alternatively used for all access technology types.

An authorized session AMBR is obtained based on a subscribed session AMBR. For example, an SMF entity shown in FIG. 1 may determine an authorized session AMBR of the UE based on the subscribed session AMBR and a local policy, or a PCF entity may determine an authorized session AMBR based on the subscribed session AMBR and a local policy or a policy obtained from a policy database. The authorized session AMBR is used to limit aggregate bit rates of all non-GBR QoS flows of a session. For example, a sum of the aggregate bit rates of all the non-GBR QoS flows of the session does not exceed the authorized session AMBR.

A value of the authorized session AMBR may remain equal to a value of the subscribed session AMBR, or may be less than or greater than a value of the subscribed session AMBR.

Optionally, the subscribed UE AMBR of the UE is a UE AMBR corresponding to an access technology type of the session.

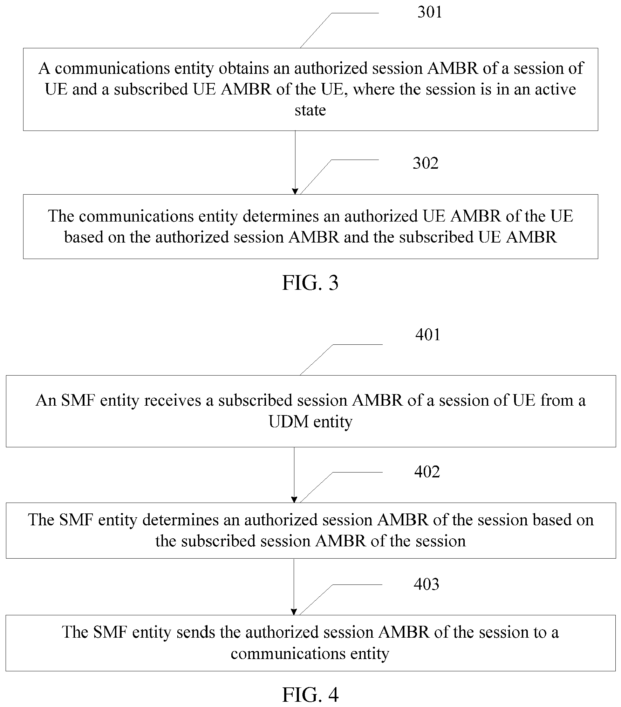

Based on the foregoing, this application provides an AMBR determining method, and the AMBR determining method may be applied to a 5G communications system shown in FIG. 1 or FIG. 2. As shown in FIG. 3, the method includes the following steps.

Step 301: A communications entity obtains an authorized session AMBR of a session of UE and a subscribed UE AMBR of the UE, where the session is in an active state.

For the authorized session AMBR of the session of the UE and the subscribed UE AMBR of the UE, refer to related descriptions of FIG. 1 or FIG. 2. Both of the authorized session AMBR of the session of the UE and the subscribed UE AMBR of the UE may belong to a same access technology type, for example, a non-3GPP access technology type or a 3GPP access technology type. Apparently, the 3GPP access technology type may be refined to a specific access technology, for example, 5G access. In addition, the authorized session AMBR of the UE may belong to an access technology type, but the subscribed UE AMBR of the UE may be a sum of subscribed UE AMBRs of various access technology types.

Step 302: The communications entity determines an authorized UE AMBR of the UE based on the authorized session AMBR and the subscribed UE AMBR.

The authorized UE AMBR of the UE may be used to limit aggregate bit rates of all non-GBR QoS flows of all PDU sessions of the UE. For example, the authorized UE AMBR of the UE may be used by an access network node to control an AMBR of the UE, to be specific, a sum of the aggregate bit rates of all the non-GBR QoS flows of all the PDU sessions of the UE does not exceed the authorized UE AMBR of the UE.

Different access technology types may correspond to different authorized UE AMBRs. For example, an access technology type is non-3GPP access, and the authorized UE AMBR of the UE may be used to control an AMBR of all non-GBR QoS flows, of a PDU session, transmitted by an access network node of a non-3GPP network.

In addition, the authorized UE AMBR of the UE belongs to a same access technology type as the authorized session AMBR in step 301. For example, when the authorized session AMBR in step 301 belongs to a first access technology type, the authorized UE AMBR in step 302 also belongs to the first access technology type.

In an implementation, when a communications system to which the communications entity belongs has different access technology types, the communications entity may separately determine authorized UE AMBRs corresponding to the different access technology types.

It is assumed that subscribed UE AMBRs of the UE are based on different access technology types, in other words, the different access technology types correspond to different subscribed UE AMBRs; and that the session of the UE is of the first access technology type. In this case, in step 301, the communications entity obtains an authorized session AMBR of the session, of the first access technology type, of the UE, and a subscribed UE AMBR of the first access technology type of the UE. In step 302, the communications entity determines an authorized UE AMBR of the first access technology type of the UE based on the authorized session AMBR of the first access technology type and the subscribed UE AMBR of the first access technology type of the UE. The first access technology type may be 5G RAN access or non-3GPP access, and is not limited.

It is further assumed that the subscribed UE AMBR of the UE is the sum of the subscribed UE AMBRs of the different access technology types, and the session of the UE is of a second access technology type. In this case, in step 301, the communications entity obtains an authorized session AMBR of the second access technology type of the UE and the foregoing subscribed UE AMBR. Step 302 may include: the communications entity obtains a subscribed UE AMBR of the second access technology type of the UE based on the subscribed UE AMBR of the UE and according to a preset rule, and then determines an authorized UE AMBR of the second access technology type of the UE based on the authorized session AMBR of the second access technology type and the subscribed UE AMBR of the second access technology type of the UE. For example, the second access technology type is non-3GPP access, and the preset rule defines a ratio of 3GPP access to non-3GPP access.

In another example, when the communications system to which the communications entity belongs has only one access technology type, the subscribed UE AMBR of the UE and the authorized session AMBR of the UE both belong to the same access technology type. In this case, the communications entity may not differentiate between access technology types of the sessions in a process of performing steps 301 and 302. In other words, the authorized session AMBR, the subscribed UE AMBR, and the authorized UE AMBR in step 301 all belong to the same access technology type.

Referring to FIG. 1 and FIG. 2, the communications entity in this embodiment of this application may be UE, an AN node, an N3IWF entity, an AMF entity, or a PCF entity.

In the foregoing step 301, the authorized session AMBR may be obtained from an SMF entity or be obtained from a PCF entity; or an SMF entity or a PCF entity sends the authorized session AMBR to the communications entity; or when the communications entity stores the authorized session AMBR of the PDU session locally, the communications entity may alternatively obtain the authorized session AMBR locally. The subscribed UE AMBR may be obtained by the SMF entity from a UDM entity and then forwarded to the communications entity, or obtained by the communications entity directly from an AMF entity, or be obtained locally when the communications entity stores the subscribed UE AMBR of the UE locally; or the subscribed UE AMBR of the UE is obtained by the communications entity directly from a UDM entity.

Optionally, in the foregoing step 301, the communications entity uses the following manners to obtain the authorized session AMBR of the session of the UE.

Manner 1: The communications entity receives a session establishment message, and the session establishment message carries the authorized session AMBR of the session.

For example, when the UE establishes a new PDU session, a new authorized UE AMBR needs to be determined because a new authorized session AMBR is generated. In this case, a session establishment message may be sent to the communications entity. The session establishment message carries the authorized session AMBR of the newly established PDU session.

Manner 2: The communications entity receives a first session modification message, and the first session modification message carries the authorized session AMBR of the session.

For example, when a PDU session of the UE is modified (to be specific, an authorized session AMBR corresponding to the session is changed), a new authorized UE AMBR also needs to be determined. In this case, a first session modification message may be sent to the communications entity. The first session modification message carries an authorized session AMBR of a modified PDU session.

Manner 3: The communications entity receives a session activation message, and the session activation message carries the authorized session AMBR of the session.

For example, when a PDU session of the UE changes from an inactive state to the active state, it is equivalent to adding a session, and therefore a new authorized UE AMBR also needs to be determined. In this case, a session activation message may be sent to the communications entity. The session activation message carries the authorized session AMBR of the active PDU session.

Manner 4: The communications entity obtains the authorized session AMBR of the session of the UE locally.

For example, when the communications entity stores an authorized session AMBR of a PDU session locally, the communications entity may alternatively obtain the authorized session AMBR locally.

For another example, if the communications entity receives a session deletion message or a session deactivation message before step 301, the communications entity may obtain the authorized session AMBR of the session of the UE and the subscribed UE AMBR of the UE locally in step 301.

Optionally, in the foregoing step 301, the communications entity uses the following manners to obtain the subscribed UE AMBR of the UE.

Manner 1: The communications entity obtains the subscribed UE AMBR of the UE locally.

When a PDU session of the UE is deleted, a new authorized UE AMBR of the UE needs to be determined, and therefore an authorized session AMBR of an active session of the UE and a subscribed UE AMBR of the UE are obtained again. Because the subscribed UE AMBR of the UE does not change and has been obtained and stored locally by the communications entity, the communications entity may directly obtain the subscribed UE AMBR locally.

Manner 2: The communications entity receives a second session modification message, and the second session modification message carries the subscribed UE AMBR of the UE.

For example, when an authorized session AMBR value of a PDU session of the UE changes, a new authorized UE AMBR of the UE needs to be determined, and therefore an authorized session AMBR of the session of the UE and the subscribed UE AMBR of the UE need to be obtained again. The subscribed UE AMBR of the UE may be sent by the AMF entity, the SMF entity, or the UDM entity to the communications entity by using the second session modification message.

Manner 3: The communications entity obtains the subscribed UE AMBR of the UE from the AMF entity or the UDM entity.

For example, when the communications entity is an AMF entity, the AMF entity may obtain the subscribed UE AMBR from the UDM entity in a process of registering the UE with the 5G network.

Alternatively, the communications entity obtains the subscribed UE AMBR of the UE directly from the UDM entity.

In the foregoing step 302, how to determine the authorized UE AMBR of the UE depends on an actual requirement. The following uses a method for determining an authorized UE AMBR of UE as an example for description.

Optionally, a smaller one of a sum of authorized session AMBRs of active sessions of the UE and a subscribed UE AMBR of the UE is used as the authorized UE AMBR of the UE.

For example, it is assumed that the active sessions of the UE include a PDU session 1, a PDU session 2, and a PDU session 3, corresponding to an authorized session AMBR 1, an authorized session AMBR 2, and an authorized session AMBR 3, respectively. In addition, the subscribed UE AMBR of the UE is a UE AMBR. The authorized UE AMBR of the UE may be determined using the following formula:
Authorized UE AMBR=min(sum(Authorized session AMBRs of active sessions of UE), Subscribed UE AMBR of the UE)=min((Authorized session AMBR 1+Authorized session AMBR 2+Authorized session AMBR 3), Subscribed UE AMBR of the UE)
A min(*a*,*b*) function means obtaining a smaller one of a and b, and a *sum*(*a*₁, *a*₁, ... , *aₙ*) function means obtaining a sum of *a*₁, *a*₁, ... , *aₙ*.

For example, assuming that the authorized session AMBR 1=50, the authorized session AMBR 2=80, the authorized session AMBR 3=20, and the subscribed UE AMBR=160, the authorized UE AMBR=min(50+80+20, 160)=150.

Optionally, after the foregoing step 302, to be specific, after the communications entity determines the authorized UE AMBR of the UE, the foregoing method further includes the following step when the communications entity is UE, an AMF entity, or a PCF entity.

The communications entity further sends the authorized UE AMBR of the UE to an AN node or an N3IWF, so that the AN node or the N3IWF can control the UE based on the received authorized UE AMBR of the UE, for example, control an aggregate maximum bit rate of the UE.

Optionally, after the foregoing step 302, to be specific, after the communications entity determines the authorized UE AMBR, the foregoing method further includes:
updating a locally stored authorized UE AMBR based on the authorized UE AMBR when it is determined that the authorized UE AMBR is different from the locally stored authorized UE AMBR.

For example, the authorized UE AMBR may be directly used to replace the locally stored authorized UE AMBR, or a new authorized UE AMBR is determined based on the authorized UE AMBR and the locally stored authorized UE AMBR, and stored.

The following provides an AMBR determining method. As shown in FIG. 4, the method is performed by an SMF entity and specifically includes the following steps:
Step 401: The SMF entity receives a subscribed session AMBR of a session of UE from a UDM entity.
Step 402: The SMF entity determines an authorized session AMBR of the session based on the subscribed session AMBR of the session.
Step 403: The SMF entity sends the authorized session AMBR of the session to a communications entity. In the foregoing method, the SMF entity receives the subscribed session AMBR of the session of the UE from the UDM entity, determines the authorized session AMBR of the session based on the subscribed session AMBR of the session, and then sends the authorized session AMBR of the session to the communications entity. The authorized session AMBR of the session may be used by the communications entity to determine an authorized UE AMBR.

For the communications entity, the subscribed session AMBR, the authorized session AMBR, and the authorized UE AMBR, refer to related descriptions in the embodiment shown in FIG. 3. Details are not described herein again.

Optionally, in the foregoing step 402, the SMF entity uses the following manners to determine the authorized session AMBR of the session.

Manner 1: The SMF entity authorizes the subscribed session AMBR of the session based on an authorization policy to obtain the authorized session AMBR of the session.

The authorization policy is a local authorization policy or an authorization policy obtained from a PCF entity.

For example, the authorization policy is specifically to add a threshold for a subscribed session AMBR to obtain an authorized session AMBR, and the threshold is obtained through calculation or is preset. For another example, the authorization policy is specifically to reduce a threshold for a subscribed session AMBR to obtain an authorized session AMBR.

In this application, specific content of the authorization policy depends on an actual situation and is not specifically limited.

Manner 2: The SMF entity sends the subscribed session AMBR of the session to a PCF entity, and receives an authorized session AMBR, of the session, sent by the PCF entity.

The authorized session AMBR of the session may be determined by the PCF entity based on an authorization policy and the subscribed session AMBR of the session.

The authorization policy of the PCF entity may be the same as the authorization policy of the SMF entity. Refer to the foregoing authorization policy of the SMF entity. The authorization policy of the PCF entity may alternatively be different from the authorization policy of the SMF entity.

After the SMF entity sends the authorized session AMBR of the session of the UE to the communications entity, the communications entity may use the authorized session AMBR of the session of the UE to determine the authorized UE ABMR of the UE in combination with a subscribed UE AMBR of the UE. For a detailed method for determining the authorized UE AMBR by the communications entity, refer to related descriptions in the foregoing step 302. Details are not described herein again.

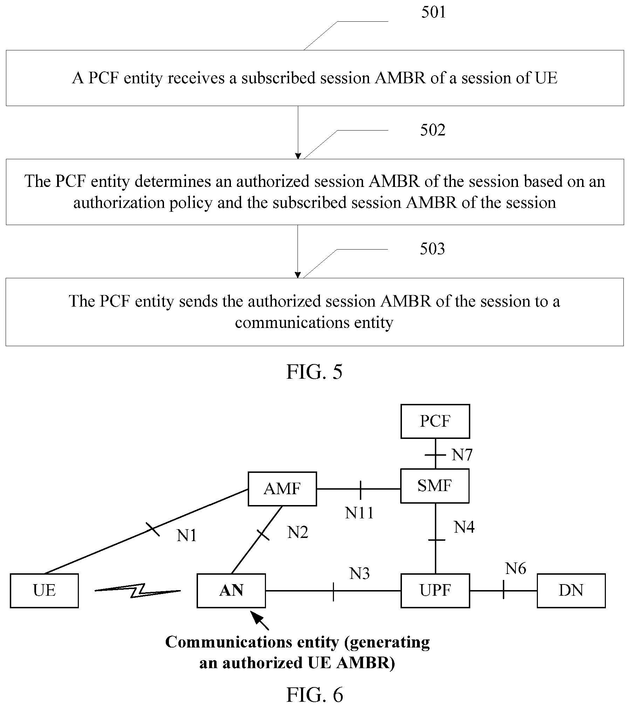

The following provides an AMBR determining method. As shown in FIG. 5, the method is performed by a PCF entity and specifically includes the following steps:
Step 501: The PCF entity receives a subscribed session AMBR of a session of UE.
Step 502: The PCF entity determines an authorized session AMBR of the session based on an authorization policy and the subscribed session AMBR of the session.
Step 503: The PCF entity sends the authorized session AMBR of the session to a communications entity.

For the communications entity, the subscribed session AMBR, and the authorized session AMBR, refer to related descriptions in the embodiment shown in FIG. 3. Details are not described herein again.

In the foregoing method, the PCF entity receives the subscribed session AMBR of the session of the UE (for example, the subscribed session AMBR of the session of the UE may be obtained by an SMF entity from a UDM entity and sent to the PCF entity), determines the authorized session AMBR of the session based on the authorization policy and the subscribed session AMBR of the session, and then sends the authorized session AMBR of the session to the communications entity. The authorized session AMBR of the session is used by the communications entity to determine an authorized UE AMBR.

For example, the authorization policy is specifically to add a threshold for a subscribed session AMBR to obtain an authorized session AMBR, and the threshold is obtained through calculation or is preset. For another example, the authorization policy is specifically to reduce a threshold for a subscribed session AMBR to obtain an authorized session AMBR.

After the PCF entity sends the authorized session AMBR of the session of the UE to the communications entity, the communications entity may use the authorized session AMBR of the session of the UE to determine the authorized UE ABMR of the UE in combination with a subscribed UE AMBR of the UE. For a detailed method for determining the authorized UE AMBR by the communications entity, refer to related descriptions in the foregoing step 302. Details are not described herein again.

The following describes in detail, with reference to a specific example, the AMBR determining method provided in this application.

An example in which a communications entity determines an authorized UE AMBR of UE in a process of establishing a new PDU session is used for description. Descriptions are provided respectively for cases in which the communications entity is UE, an AN node, an AMF entity, or a PCF entity.

### Case 1: The communications entity is an AN node.

As shown in FIG. 6, when an AN node is a communications entity, the AN node determines an authorized UE AMBR. Specifically, the AN node determines the authorized UE AMBR based on an authorized session AMBR of an active PDU session and a subscribed UE AMBR of UE. The authorized session AMBR of the session is sent by an SMF entity to the AN node during a session management procedure. The subscribed UE AMBR may be provided by the SMF entity to the AN node during the session management procedure, or be provided by an AMF entity to the AN node.

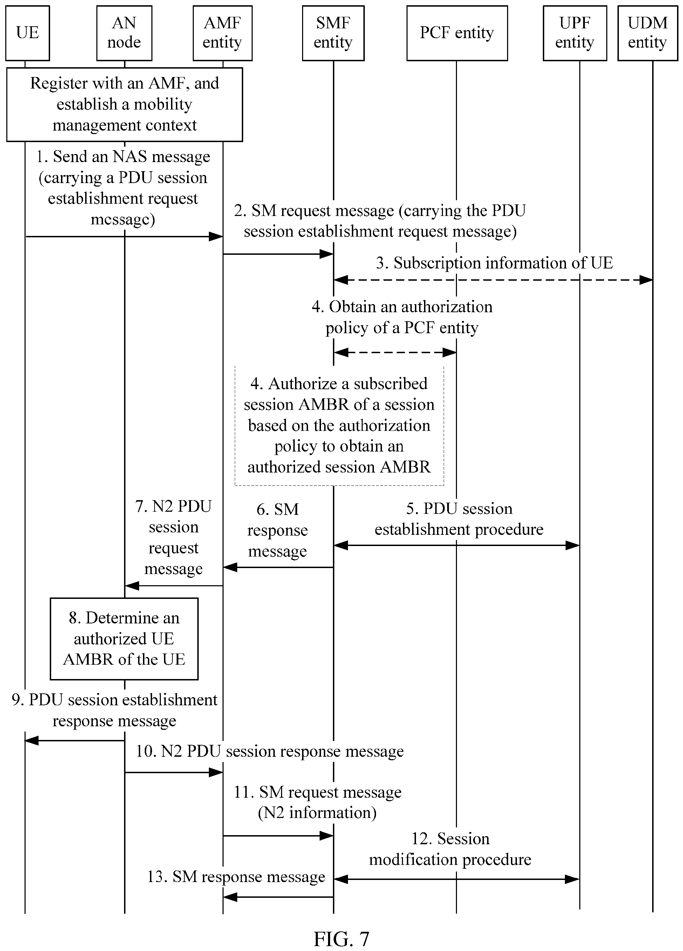

FIG. 7 shows a detailed procedure for determining an AMBR when a communications entity is an AN node. First, UE registers with an AMF entity, and establishes a mobility management context with the AMF entity. Optionally, the AMF entity obtains a subscribed UE AMBR of the UE from a UDM entity during the process.

After the UE establishes the mobility management context with the AMF entity, the UE determines the AMBR by using the following steps.

Step: 1: The UE sends a non-access stratum (English: non-access stratum, NAS for short) message to the AMF entity.

The NAS message includes a PDU session establishment request message and the like.

Step 2: The AMF entity sends a session management (English: Session Management, SM for short) request message to an SMF entity.

The SM request message includes the PDU session establishment request message.

Step 3: The SMF entity obtains subscription information of the UE from the UDM entity, where the subscription information includes a subscribed session AMBR of a session.

Optionally, the subscription information further includes the subscribed UE AMBR of the UE.

Optionally, if the SMF entity has obtained subscription information of the UE from the UDM entity, and the SMF entity stores the subscription information of the UE, then step 3 may not be performed. In other words, the SMF entity may obtain the subscription information of the UE locally.

Step 4: The SMF entity obtains an authorization policy from a PCF entity, and authorizes the subscribed session AMBR of the session based on the authorization policy to obtain an authorized session AMBR.

Step 4 is an optional step. For example, step 4 may be performed in a scenario in which dynamic policy control and charging (English: Policy Control and Charging, PCC for short) is deployed on a network side.

Alternatively, step 4 may be replaced by the following steps 4a-4c:
Step 4a: The SMF entity sends the obtained subscribed session AMBR of the session to a PCF entity.
Step 4b: The PCF entity authorizes the received subscribed session AMBR based on a local authorization policy to obtain an authorized session AMBR of the session, and sends the authorized session AMBR to the SMF entity.
Step 4c: The SMF entity receives the authorized session AMBR from the PCF entity.

Step 5: The SMF entity initiates a PDU session establishment procedure to a UPF entity.

Step 6: The SMF entity sends an SM response message to the AMF entity.

The SM response message includes N2 interface session information and an N1 SM container (container) that are to be sent to the AN node. The container includes a PDU session establishment response message. The N2 interface session information includes the authorized session AMBR, or may further include the subscribed UE AMBR of the UE.

Step 7: The AMF entity sends an N2 PDU session request message to the AN node.

The session request message includes the N2 interface session information and the N1 SM container that are received from the SMF entity.

It should be noted that, for the subscribed UE AMBR of the UE, if the SMF entity sends the subscribed UE AMBR of the UE to the AMF entity, the N2 interface session information includes the subscribed UE AMBR of the UE; and if the SMF entity does not provide the subscribed UE AMBR of the UE in step 6, the AMF entity may provide the subscribed UE AMBR of the UE. In this case, when the UE registers with the AMF entity, the AMF entity may obtain the subscribed UE AMBR of the UE from the UDM entity and store the subscribed UE AMBR of the UE.

Step 8: The AN node determines the authorized UE AMBR of the UE based on the received authorized session AMBR of the session and the received subscribed UE AMBR of the UE.

For example, if the UE has another active PDU session, the AN node may determine the authorized UE AMBR of the UE based on the authorized session AMBR of the session received in step 6, the subscribed UE AMBR of the UE received in step 7, and an authorized session AMBR of the another PDU session.

In addition, if the determined authorized UE AMBR of the UE is different from a locally stored authorized UE AMBR of the UE, step 8 may further include: updating the locally stored authorized UE AMBR of the UE based on the determined authorized UE AMBR of the UE.

Optionally, step 8 may alternatively be performed after step 9. This is not limited.

Step 9: The AN node sends a PDU session establishment response message to the UE.

In step 9, the AN node may establish an air interface resource with the UE.

Step 10: The AN node sends an N2 PDU response message to the AMF entity.

The N2 PDU response message includes tunnel information of the session.

Step 11: The AMF entity sends, to the SMF entity, an SM request message that includes the tunnel information of the session.

Step 12: The SMF entity initiates a session modification procedure to the UPF entity to establish a tunnel between the UPF entity and the AN node.

Step 13: The SMF entity sends an SM response message to the AMF entity.

For the subscribed session AMBR, the authorized session AMBR, the authorized UE AMBR, and the like, refer to related descriptions in the embodiment shown in FIG. 3. Details are not described herein again.

It should be noted that, at any moment, when the AN node determines that the authorized session AMBR of the PDU session established between the UE and a network changes, or the PDU session is deleted or deactivated, or a session is newly added, or the subscribed UE AMBR of the UE changes, the AN node is triggered to determine a new authorized UE AMBR of the UE. If the determined authorized UE AMBR is different from the authorized UE AMBR being used, the determined authorized UE AMBR is used to replace the authorized UE AMBR being used. If the determined authorized UE AMBR is the same as the authorized UE AMBR being used, the authorized UE AMBR remains unchanged.

In addition, when the UE changes from an idle state to a connected state, the AN node also needs to determine a new authorized UE AMBR.

According to the method for determining and using the authorized UE AMRB by the AN node provided in this embodiment of the present invention, the AN node determines the authorized UE AMBR in a timely manner and uses the authorized UE AMBR, to control an aggregate maximum bit rate of the user, ensuring proper utilization of resources.

### Case 2: The communications entity is UE.

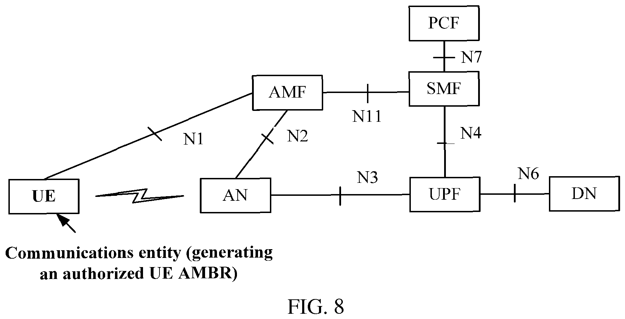

As shown in FIG. 8, when UE is a communications entity, the UE determines an authorized UE AMBR of the UE. Specifically, the UE determines the authorized UE AMBR based on authorized session AMBRs of all active PDU sessions and a subscribed UE AMBR of the UE. The authorized session AMBRs of the sessions are sent by an SMF entity to the UE during a session management procedure. The subscribed UE AMBR may be provided by the SMF entity to the UE during the session management procedure, or be provided by an AMF entity to the UE.

After determining the authorized UE AMBR of the UE, the UE sends the determined authorized UE AMBR of the UE to an AN node. The AN node controls the UE based on the authorized UE AMBR of the UE.

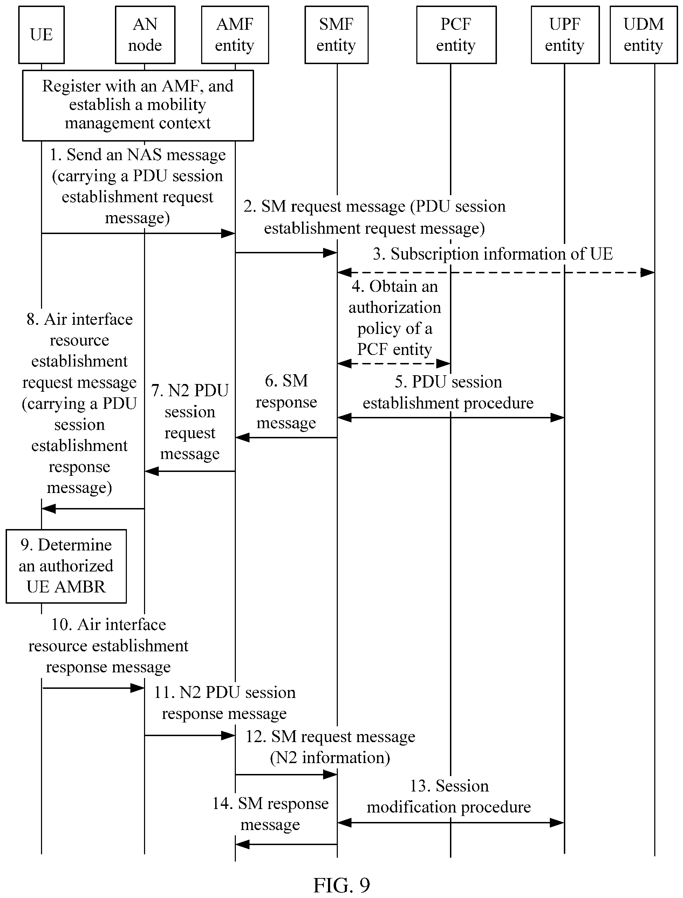

FIG. 9 shows a detailed procedure for determining an AMBR when a communications entity is UE. First, the UE registers with an AMF entity, and establishes a mobility management context with the AMF entity. Optionally, the UE or the AMF entity obtains a subscribed UE AMBR of the UE during the process.

After the UE establishes the mobility management context with the AMF entity, the UE determines the AMBR by using the following steps.

Step 1: The UE sends a NAS message to the AMF entity.

The NAS message includes a PDU session establishment request message and the like.

Step 2: The AMF entity sends an SM request message to an SMF entity.

The SM request message includes the PDU session establishment request message.

Step 3: The SMF entity obtains subscription information of the UE from a UDM entity, where the subscription information includes a subscribed session AMBR of a session.

Optionally, the subscription information further includes the subscribed UE AMBR of the UE.

Optionally, if the SMF entity has obtained subscription information of the UE from the UDM entity, and the SMF entity stores the subscription information of the UE, then step 3 may not be performed. In other words, the SMF entity may obtain the subscription information of the UE locally.

Step 4: The SMF entity obtains an authorization policy from a PCF entity, and authorizes the obtained subscribed session AMBR of the session based on the authorization policy to obtain an authorized session AMBR.

Step 4 is an optional step. For example, step 4 may be performed in a scenario in which PCC is deployed on a network side.

Alternatively, step 4 may be replaced by the following steps 4a-4c:
Step 4a: The SMF entity sends the obtained subscribed session AMBR of the session to a PCF entity.
Step 4b: The PCF entity authorizes the received subscribed session AMBR based on a local authorization policy to obtain an authorized session AMBR of the session, and sends the authorized session AMBR to the SMF entity.
Step 4c: The SMF entity receives the authorized session AMBR from the PCF entity.

Step 5: The SMF entity initiates a session establishment procedure to a UPF entity.

Step 6: The SMF entity sends an SM response message to the AMF entity.

The response message includes N2 interface session information and an N1 SM container (container) that are to be sent to an AN node. The container includes a PDU session establishment response message. The PDU session establishment response message in the N1 SM container includes the authorized session AMBR, or may further include the subscribed UE AMBR of the UE.

Step 7: The AMF entity sends an N2 PDU session request message to the AN node.

The session request message includes the N2 interface session information and the N1 SM container that are received from the SMF entity.

It should be noted that, for the subscribed UE AMBR of the UE, if the SMF entity sends the subscribed UE AMBR of the UE to the AMF entity, the N2 interface session information includes the subscribed UE AMBR of the UE; and if the SMF entity does not provide the subscribed UE AMBR of the UE in step 6, the AMF entity may provide the subscribed UE AMBR of the UE. In this case, when the UE registers with the AMF entity, the AMF entity may obtain the subscribed UE AMBR of the UE from the UDM entity and store the subscribed UE AMBR of the UE.

Step 8: The AN node sends an air interface resource establishment request message to the UE.

The request message includes the PDU session establishment response message. The PDU session establishment response message includes the authorized session AMBR, or may further include the subscribed UE AMBR.

Optionally, the subscribed UE AMBR of the UE may alternatively be sent by the AMF entity to the UE, or be obtained by the UE from the AMF entity.

Step 9: The UE determines an authorized UE AMBR based on the received authorized session AMBR and the received subscribed UE AMBR.

For example, if the UE has another active PDU session, the UE may determine the authorized UE AMBR of the UE based on the authorized session AMBR of the session and the subscribed UE AMBR of the UE that are received in step 8, and an authorized session AMBR of the another PDU session.

In addition, if the determined authorized UE AMBR of the UE is different from a locally stored authorized UE AMBR of the UE, step 9 may further include: updating the locally stored authorized UE AMBR of the UE based on the determined authorized UE AMBR of the UE.

Step 10: The UE sends an air interface resource establishment response message to the AN node.

The air interface resource establishment response message includes the authorized UE AMBR of the UE.

Step 11: The AN node sends an N2 PDU response message to the AMF entity.

The N2 PDU response message includes tunnel information of the session.

In step 11, after receiving the authorized UE AMBR, of the UE, sent by the UE, the AN node may control an aggregate maximum bit rate of the UE based on the authorized UE AMBR.

Step 12: The AMF entity sends, to the SMF entity, an SM request message that includes the tunnel information of the session.

Step 13: The SMF entity initiates a session modification procedure to the UPF entity to establish a tunnel between the UPF entity and the AN node.

Step 14: The SMF entity sends an SM response message to the AMF entity.

It should be noted that, at any moment, when the UE determines that the authorized session AMBR of the PDU session established between the UE and a network changes, or the PDU session is deleted or deactivated, or a session is newly added, or the subscribed UE AMBR of the UE changes, the UE is triggered to determine a new authorized UE AMBR of the UE. If the determined authorized UE AMBR is different from the authorized UE AMBR being used, the determined authorized UE AMBR is used to replace the authorized UE AMBR being used, and is sent to the AN node. If the determined authorized UE AMBR is the same as the authorized UE AMBR being used, the authorized UE AMBR remains unchanged, and is not sent to the AN node. Alternatively, the UE always sends the newly determined authorized UE AMBR.

In addition, when the UE changes from an idle state to a connected state, the UE also needs to determine a new authorized UE AMBR.

For the subscribed session AMBR, the authorized session AMBR, the authorized UE AMBR, and the like, refer to related descriptions in the embodiment shown in FIG. 3. Details are not described herein again.

According to the method for determining the authorized UE AMRB and sending the authorized UE AMRB to the AN node by the UE provided in this embodiment of the present invention, the AN node uses the authorized UE AMBR to control an aggregate maximum bit rate of the user, ensuring proper utilization of resources.

### Case 3: The communications entity is an AMF entity.

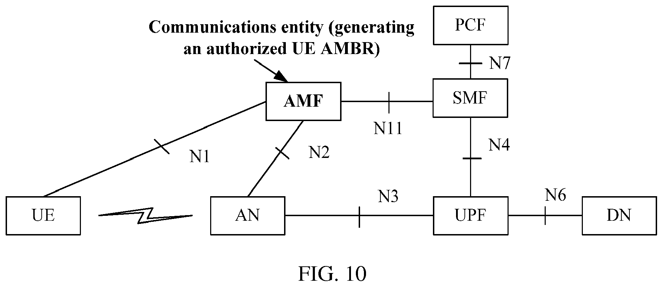

As shown in FIG. 10, when an AMF entity is a communications entity, the AMF entity determines an authorized UE AMBR of UE. Specifically, the AMF entity determines the authorized UE AMBR based on authorized session AMBRs of all active PDU sessions and a subscribed UE AMBR of the UE. The authorized session AMBRs of the sessions are sent by an SMF entity to the AMF entity during a session management procedure. The subscribed UE AMBR may be provided by the SMF entity to the AMF entity during the session management procedure, or be obtained by the AMF entity from a UDM entity during a UE registration process.

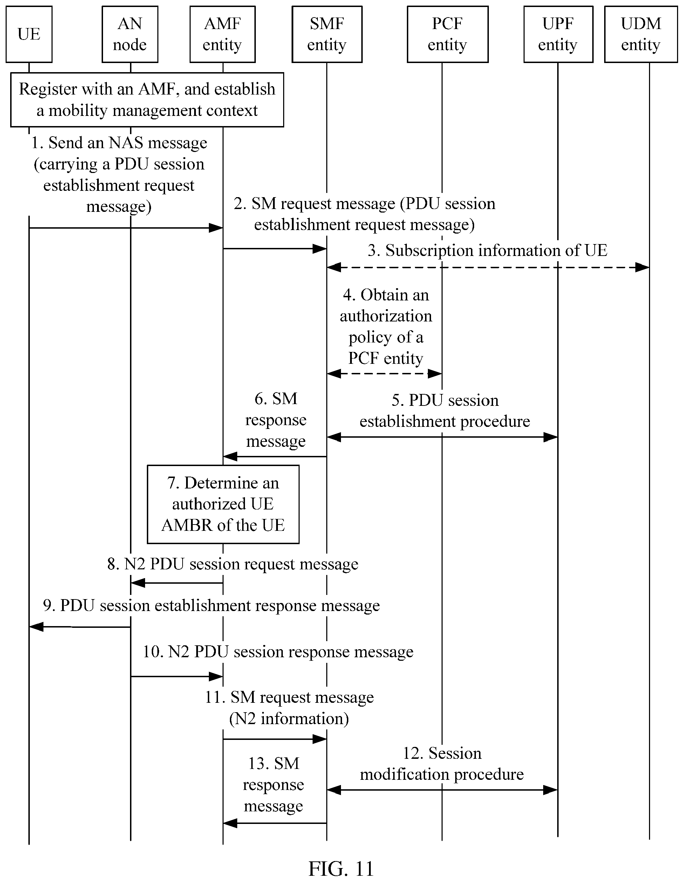

FIG. 11 shows a detailed procedure for determining an AMBR when a communications entity is an AMF entity. First, UE registers with the AMF entity, and establishes a mobility management context with the AMF entity. Optionally, the AMF entity obtains a subscribed UE AMBR of the UE from a UDM entity during the process.

After the UE establishes the mobility management context with the AMF entity, the UE determines the AMBR by using the following steps.

Step 1: The UE sends a NAS message to the AMF entity.

The NAS message includes a PDU session establishment request message and the like.

Step 2: The AMF entity sends an SM request message to an SMF entity.

The SM request message includes the PDU session establishment request message.

Step 3: The SMF entity obtains subscription information of the UE from the UDM entity, where the subscription information includes a subscribed session AMBR of a session.

Optionally, the subscription information further includes the subscribed UE AMBR of the UE.

Optionally, if the SMF entity has obtained subscription information of the UE from the UDM entity, and the SMF entity stores the subscription information of the UE, then step 3 may not be performed. In other words, the SMF entity may obtain the subscription information of the UE locally.

Step 4: The SMF entity obtains an authorization policy from a PCF entity, and authorizes the obtained subscribed session AMBR of the session based on the authorization policy to obtain an authorized session AMBR.

Step 4 is an optional step. For example, step 4 may be performed in a scenario in which PCC is deployed on a network side.

Alternatively, step 4 may be replaced by the following steps 4a-4c:
Step 4a: The SMF entity sends the obtained subscribed session AMBR of the session to a PCF entity.
Step 4b: The PCF entity authorizes the received subscribed session AMBR based on a local authorization policy to obtain an authorized session AMBR of the session, and sends the authorized session AMBR to the SMF entity.
Step 4c: The SMF entity receives the authorized session AMBR from the PCF entity.

Step 5: The SMF entity initiates a session establishment procedure to a UPF entity.

Step 6: The SMF entity sends an SM response message to the AMF entity.

The response message includes N2 interface session information and an N1 SM container (container) that are to be sent to an AN node. The container includes a PDU session establishment response message. The SM response message further includes the authorized session AMBR, or may further include the subscribed UE AMBR of the UE.

Step 7: The AMF entity determines an authorized UE AMBR based on the received authorized session AMBR and the received subscribed UE AMBR.

The subscribed UE AMBR may alternatively be obtained by the AMF entity from the UDM entity when the UE registers with the AMF entity.

For example, if the UE has another active PDU session, the AMF entity may determine the authorized UE AMBR of the UE based on the authorized session AMBR of the session and the subscribed UE AMBR of the UE that are received in step 6, and an authorized session AMBR of the another PDU session.

Optionally, if the subscribed UE AMBR of the UE is not provided in the foregoing step 6, the AMF entity may obtain the subscribed UE AMBR of the UE locally. The subscribed UE AMBR stored locally by the AMF entity is obtained by the AMF entity from the UDM entity and stored locally, when the UE registers with the AMF entity.

In addition, if the determined authorized UE AMBR of the UE is different from a locally stored authorized UE AMBR of the UE, step 7 may further include: updating the locally stored authorized UE AMBR of the UE based on the determined authorized UE AMBR of the UE.

Step 8: The AMF entity sends an N2 PDU session request message to the AN node.

The session request message includes the N2 interface session information and the N1 SM container that are received from the SMF entity, and the authorized UE AMBR of the UE.

Step 9: The AN node sends a PDU session establishment response message to the UE.

In step 9, the AN node may establish an air interface resource with the UE.

Step 10: The AN node sends an N2 PDU response message to the AMF entity.

The N2 PDU response message includes tunnel information of the session.

Step 11: The AMF entity sends, to the SMF entity, an SM request message that includes the tunnel information of the session.

Step 12: The SMF entity initiates a session modification procedure to the UPF entity to establish a tunnel between the UPF entity and the AN node.

Step 13: The SMF entity sends an SM response message to the AMF entity.

For the subscribed session AMBR, the authorized session AMBR, the authorized UE AMBR, and the like, refer to related descriptions in the embodiment shown in FIG. 3. Details are not described herein again.

It should be noted that, at any moment, when the AMF entity determines that the authorized session AMBR of the PDU session established between the UE and a network changes, or the PDU session is deleted or deactivated, or a session is newly added, or the subscribed UE AMBR of the UE changes, the AMF entity is triggered to determine a new authorized UE AMBR of the UE. If the determined authorized UE AMBR is different from the authorized UE AMBR being used, the determined authorized UE AMBR is used to replace the authorized UE AMBR being used, and is sent to the AN node. If the determined authorized UE AMBR is the same as the authorized UE AMBR being used, the authorized UE AMBR remains unchanged, and is not sent to the AN node.

In addition, when the UE changes from an idle state to a connected state, the AMF entity also needs to determine a new authorized UE AMBR.

According to the method for determining the authorized UE AMRB and sending the authorized UE AMRB to the AN node by the AMF entity provided in this embodiment of the present invention, the AN node uses the authorized UE AMBR to control an aggregate maximum bit rate of the user, ensuring proper utilization of resources.

### Case 4: The communications entity is a PCF entity.

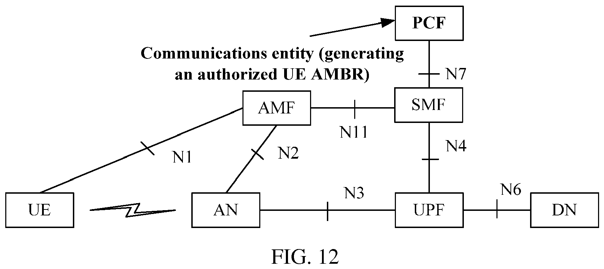

As shown in FIG. 12, when a PCF entity is a communications entity, the PCF entity determines an authorized UE AMBR of UE. Specifically, the PCF entity determines the authorized UE AMBR based on authorized session AMBRs of all active PDU sessions and a subscribed UE AMBR of the UE. The authorized session AMBRs of the sessions are sent by an SMF entity to the PCF entity during a session management procedure, or are set by the PCF entity based on a local policy. The subscribed UE AMBR may be provided by the SMF entity to the PCF entity during the session management procedure, or be obtained by the PCF entity from a UDM entity.

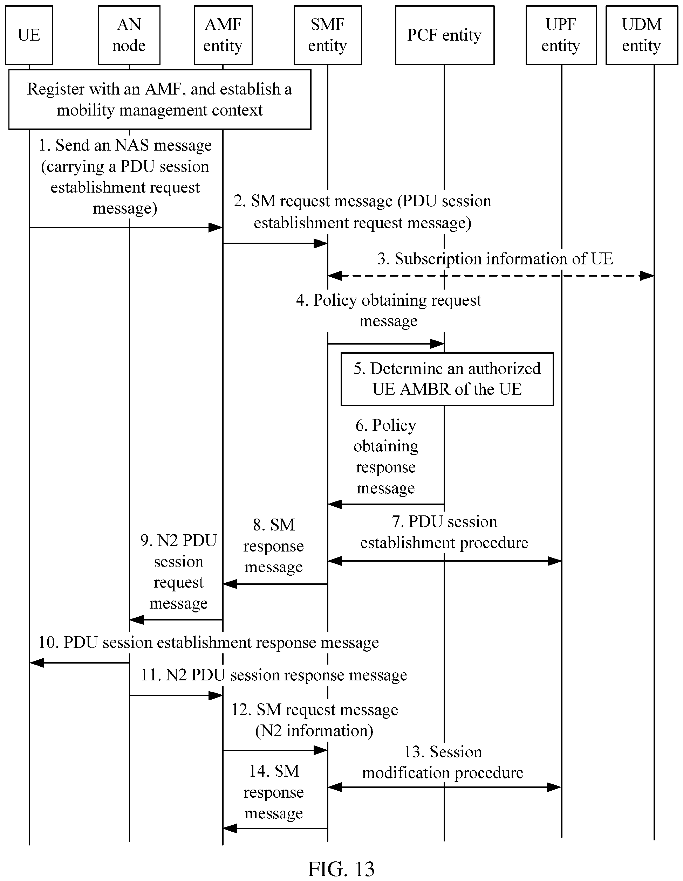

FIG. 13 shows a detailed procedure for determining an AMBR when a communications entity is a PCF entity. First, UE registers with an AMF entity, and establishes a mobility management context with the AMF entity. Optionally, the AMF entity obtains a subscribed UE AMBR of the UE from a UDM entity during the process.

After the UE establishes the mobility management context with the AMF entity, the UE determines the AMBR by using the following steps.

Step 1: The UE sends a NAS message to the AMF entity.

The NAS message includes a PDU session establishment request message and the like.

Step 2: The AMF entity sends an SM request message to an SMF entity.

The SM request message includes the PDU session establishment request message.

Step 3: The SMF entity obtains subscription information of the UE from the UDM entity, where the subscription information includes a subscribed session AMBR of a session.

Optionally, the subscription information further includes the subscribed UE AMBR of the UE.

Optionally, if the SMF entity has obtained subscription information of the UE from the UDM entity, and the SMF entity stores the subscription information of the UE, then step 3 may not be performed. In other words, the SMF entity may obtain the subscription information of the UE locally.

Step 4: The SMF entity sends a policy obtaining request message to the PCF entity.

The request message includes an authorized session AMBR and the subscribed UE AMBR.

The authorized session AMBR is obtained after the SMF entity authorizes the subscribed session AMBR obtained from the UDM entity, and the subscribed UE AMBR is obtained by the SMF entity from the UDM entity.

Alternatively, step 4 may be replaced by the following steps 4a-4b:
Step 4a: The SMF entity sends the obtained subscribed session AMBR of the session to the PCF entity.
Step 4b: The PCF entity authorizes the received subscribed session AMBR based on a local authorization policy to obtain an authorized session AMBR of the session.

Step 5: The PCF entity determines an authorized UE AMBR based on the authorized session AMBR and the subscribed UE AMBR.

For example, if the UE has another active PDU session, the PCF entity may determine the authorized UE AMBR of the UE based on the authorized session AMBR of the session and the subscribed UE AMBR of the UE that are received in step 4, and an authorized session AMBR of the another PDU session.

In addition, if the determined authorized UE AMBR of the UE is different from a locally stored authorized UE AMBR of the UE, step 5 may further include: updating the locally stored authorized UE AMBR of the UE based on the determined authorized UE AMBR of the UE.

Optionally, the subscribed UE AMBR obtained by the PCF entity may be sent by the SMF entity in the foregoing step 4, or may be obtained by the PCF entity directly from the UDM entity.

Step 6: The PCF entity sends a policy obtaining response message to the SMF entity.

The response message includes the authorized UE AMBR of the UE.

Step 7: The SMF entity initiates a session establishment procedure to a UPF entity.

Step 8: The SMF entity sends an SM response message to the AMF entity.

The SM response message includes N2 interface session information and an N1 SM container that are to be sent to an AN node. The container includes a PDU session establishment response message. The N2 interface session information includes the authorized UE AMBR.

Step 9: The AMF entity sends an N2 PDU session request message to the AN node.

The request message includes the N2 interface session information and the N1 SM container that are received from the SMF entity.

The AN node controls maximum bandwidth of the UE based on the authorized UE AMBR included in the N2 interface session information.

Step 10: The AN node sends an air interface resource establishment request message to the UE.

The request message includes the PDU session establishment response message.

Step 11: The AN node sends an N2 PDU response message to the AMF entity.

The N2 PDU response message includes tunnel information of the session.

Step 12: The AMF entity sends, to the SMF entity, an SM request message that includes the tunnel information of the session.

Step 13: The SMF entity initiates a session modification procedure to the UPF entity to establish a tunnel between the UPF entity and the AN node.

Step 14: The SMF entity sends an SM response message to the AMF entity.

For the subscribed session AMBR, the authorized session AMBR, the authorized UE AMBR, and the like, refer to related descriptions in the embodiment shown in FIG. 3. Details are not described herein again.

It should be noted that, at any moment, when the PCF entity determines that the authorized session AMBR of the PDU session established between the UE and a network changes, or the PDU session is deleted or deactivated, or a session is newly added, or the subscribed UE AMBR of the UE changes, the PCF entity is triggered to determine a new authorized UE AMBR of the UE. If the determined authorized UE AMBR is different from the authorized UE AMBR being used, the determined authorized UE AMBR is used to replace the authorized UE AMBR being used, and is sent to the AN node. If the determined authorized UE AMBR is the same as the authorized UE AMBR being used, the authorized UE AMBR remains unchanged, and is not sent to the AN node.

In addition, when the UE changes from an idle state to a connected state, the PCF entity also needs to determine a new authorized UE AMBR.

According to the method for determining the authorized UE AMRB and sending the authorized UE AMRB to the AN node by the PCF entity provided in this embodiment of the present invention, the AN node uses the authorized UE AMBR to control an aggregate maximum bit rate of the user, ensuring proper utilization of resources.

During non-3GPP access, for a process of determining and controlling an authorized UE AMBR, refer to the processes of determining the authorized UE AMBR and controlling the UE based on the authorized UE AMBR by the AN node. When the UE connects to a network through non-3GPP access, an N3IWF entity may perform UE AMBR derivation, and the N3IWF entity controls an authorized UE AMBR. Further, corresponding processing processes of UE, an AMF entity, and a PCF entity are also similar to the foregoing method performed when the communications entity is an AN node. For details, refer to the foregoing descriptions.

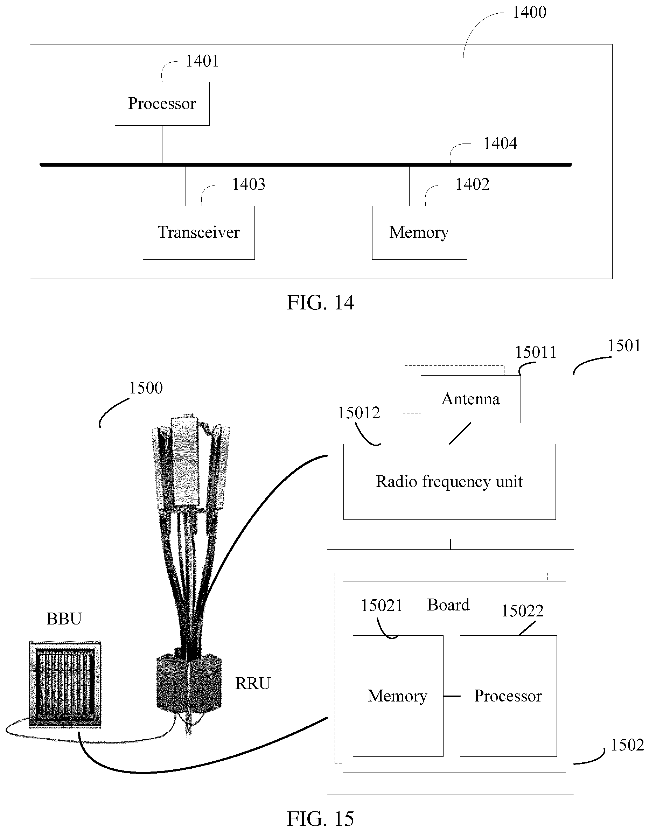

Based on a same invention conception, an embodiment of this application further provides a communications entity 1400. The communications entity 1400 may be configured to perform the method in the embodiment shown in FIG. 3. The communications entity 1400 may be an AN node, UE, an AMF entity, an N3IWF entity, or a PCF entity. As shown in FIG. 14, the communications entity 1400 includes at leat one processor 1401 and a memory 1402, or may further include a transceiver 1403, or may further include a bus 1404.

The processor 1401, the memory 1402, and the transceiver 1403 are all connected by using the bus 1404.

The memory 1402 is configured to store a computer executable instruction.

The processor 1401 is configured to execute the computer executable instruction stored in the memory 1402.

The processor 1401 may include different types of processors 1401, or include one type of processor 1401. The processor 1401 may be any one of the following components with calculation and processing capabilities: a central processing unit (Central Processing Unit, CPU for short), an ARM processor, a field programmable gate array (Field Programmable Gate Array, FPGA for short), a dedicated processor, or the like. In an optional implementation, the processor 1401 may alternatively be integrated as a many-core processor.

The memory 1402 may be any one or any combination of the following storage media: a random access memory (Random Access Memory, RAM for short), a read-only memory (read-only memory, ROM for short), a nonvolatile memory (nonvolatile memory, NVM for short), a solid state drive (Solid State Drive, SSD for short), a mechanical hard disk, a magnetic disk, a disk array, and the like.

The transceiver 1403 is configured for data exchange between the communications entity 1400 and another device. The transceiver 1403 may be any one or any combination of the following components with a network access function: a network interface (for example, an Ethernet interface), a wireless network interface card, and the like.

The bus 1404 may include an address bus, a data bus, a control bus, and the like. For ease of representation, the bus is represented by using a thick line in FIG. 13. The bus 1404 may be any one or any combination of the following components for wired data transmission: an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, and the like.

Based on a same invention conception, an embodiment of this application further provides an AN node 1500. The AN node may be, for example, a base station. FIG. 15 is a schematic structural diagram of the AN node 1500. The AN node 1500 may be configured to perform the method shown in FIG. 3 (that is, the communications entity in FIG. 3 is an AN node). The AN node 1500 includes one or more remote radio units (English: remote radio unit, RRU for short) 1501 and one or more baseband units (English: baseband unit, BBU for short) 1502. The RRU 1501 may be referred to as a transceiver unit, a transceiver, a transceiver circuit, a transceiver, or the like, and may include at least one antenna 15011 and a radio frequency unit 15012. The RRU 1501 part is mainly configured to transmit and receive radio frequency signals and convert between a radio frequency signal and a baseband signal, for example, configured to send, to user equipment (that is, a terminal), the signaling indication described in the foregoing embodiments. The BBU 1502 part is mainly configured to perform baseband processing, control the AN node, and the like. The RRU 1501 and the BBU 1502 may be physically disposed together, or may be physically disposed separately, that is, a distributed AN node.

The BBU 1502 is a control center of the AN node, or may be referred to as a processing unit, and is mainly configured to complete baseband processing functions such as channel coding, multiplexing, modulation, and spectrum spreading. For example, the BBU (the processing unit) may be configured to control the AN node to execute the procedure shown in FIG. 3.

In an example, the BBU 1502 may include one or more boards, and a plurality of boards may jointly support a radio access network (such as an LTE network or a 5G network) of a single access standard, or may separately support radio access networks of different access standards. The BBU 1502 further includes a memory 15021 and a processor 15022. The memory 15021 is configured to store a necessary instruction and data. For example, the memory 15021 stores parameter sets (including a first parameter set and a second parameter set) and a generated RS sequence that are in the foregoing embodiments. The processor 15022 is configured to control the AN node to perform a necessary action, for example, configured to control the AN node to perform the actions shown in FIG. 3. The memory 15021 and the processor 15022 may serve one or more boards. In other words, a memory and a processor may be separately disposed on each board. Alternatively, a plurality of boards may share a same memory and processor. In addition, a necessary circuit is further disposed on each board.

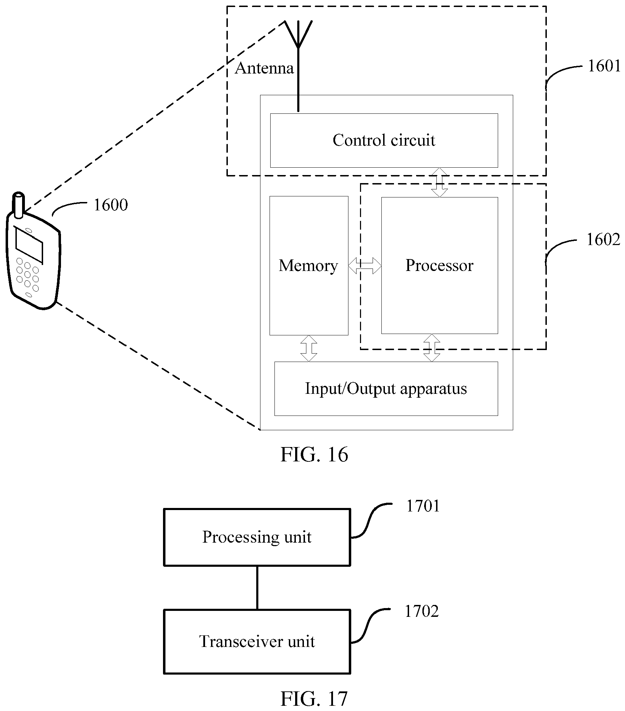

Based on a same invention conception, an embodiment of this application further provides user equipment UE 1600. FIG. 16 is a schematic structural diagram of the user equipment UE. For ease of description, FIG. 16 shows only main components of the user equipment. As shown in FIG. 16, the user equipment 1600 includes a processor, a memory, a control circuit, an antenna, and an input and output apparatus. The processor is mainly configured to: process a communications protocol and communication data, control the entire user equipment, execute a software program, and process data of the software program, for example, configured to support the UE in performing the actions described in FIG. 3 (that is, the communications entity in FIG. 3 is UE). The memory is mainly configured to store a software program and data, for example, store a codebook described in the foregoing embodiments. The control circuit is mainly configured to convert between a baseband signal and a radio frequency signal, and process a radio frequency signal. The control circuit together with the antenna may also be referred to as a transceiver, mainly configured to transmit and receive radio frequency signals in an electromagnetic wave form.

After the user equipment is powered on, the processor may read the software program in the memory, explain and execute an instruction of the software program, and process the data of the software program. When data needs to be sent in a wireless manner, the processor performs baseband processing on the to-be-sent data, and outputs a baseband signal to a radio frequency circuit. After the radio frequency circuit performs radio frequency processing on the baseband signal, a radio frequency signal is sent by using the antenna in an electromagnetic wave form. When data is sent to the user equipment, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 16 shows only one memory and one processor. In actual user equipment, a plurality of processors and memories may exist. The memory may also be referred to as a storage medium, a storage device, or the like. This is not limited in this embodiment of the present invention.

In an optional implementation, the processor may include a baseband processor and a central processing unit. The baseband processor is mainly configured to process the communications protocol and the communication data. The central processing unit is mainly configured to: control the entire user equipment, execute the software program, and process the data of the software program. The processor in FIG. 16 integrates functions of the baseband processor and the central processing unit. A person skilled in the art may understand that the baseband processor and the central processing unit may alternatively be independent processors, and are interconnected by using technologies such as a bus. A person skilled in the art may understand that the user equipment may include a plurality of baseband processors to adapt to different network standards, the user equipment may include a plurality of central processing units to enhance a processing capability of the user equipment, and various components of the user equipment may be connected by using various buses. The baseband processor may alternatively be expressed as a baseband processing circuit or a baseband processing chip. The central processing unit may alternatively be expressed as a central processing circuit or a central processing chip. The function of processing a communications protocol and communication data may be built into the processor; or may be stored in the memory in a form of a software program, so that the processor executes the software program to implement the baseband processing function.

For example, in this embodiment of the present invention, the antenna with transmitting and receiving functions, and the control circuit may be considered as a transceiver unit 1601 of the UE 1600. The processor with a processing function is considered as a processing unit 1602 of the UE 1600. As shown in FIG. 16, the UE 1600 includes the transceiver unit 1601 and the processing unit 1602. The transceiver unit may also be referred to as a transceiver, a transceiver, a transceiver apparatus, or the like. Optionally, a component that is in the transceiver unit 1601 and that is configured to implement a receiving function may be considered as a receive unit, and a component that is in the transceiver unit 1601 and that is configured to implement a transmitting function may be considered as a transmit unit, that is, the transceiver unit 1601 includes the receive unit and the transmit unit. For example, the receive unit may also be referred to as a receiver, a receiver, a receiver circuit, or the like, and the transmit unit may be referred to as a transmitter, a transmitter, a transmit circuit, or the like.

Based on a same invention conception, as shown in FIG. 17, this application further provides a communications entity. The communications entity may be configured to perform the method in the embodiment shown in FIG. 3. The communications entity may be an AN node, UE, an AMF entity, an N3IWF entity, or a PCF entity. Alternatively, the communications entity may be configured to perform the actions that are performed by the related device in the method embodiment shown in FIG. 7, FIG. 9, FIG. 11, or FIG. 13.

As shown in FIG. 17, the communications entity includes at leat one processing unit 1701 and a transceiver unit 1702, and further, may include a storage unit and a bus.

The processing unit 1701 is configured to: obtain an authorized session AMBR of a session of UE and a subscribed UE AMBR of the UE, where the session is in an active state; and determine an authorized UE AMBR of the UE based on the authorized session AMBR and the subscribed UE AMBR.

Optionally, the communications entity further includes the transceiver unit 1702, and the processing unit 1701 is specifically configured to:
receive a session establishment message by using the transceiver unit 1702, where the session establishment message carries the authorized session AMBR of the session; or
receive a first session modification message by using the transceiver unit 1702, where the first session modification message carries the authorized session AMBR of the session; or
receive a session activation message by using the transceiver unit 1702, where the session activation message carries the authorized session AMBR of the session; or
obtain the authorized session AMBR of the session of the UE locally.

For the subscribed session AMBR, the authorized session AMBR, the authorized UE AMBR, and the like, refer to related descriptions in the embodiment shown in FIG. 3. Details are not described herein again.

Optionally, the processing unit 1701 is specifically configured to:
obtain the subscribed UE AMBR of the UE locally; or
receive a second session modification message by using the transceiver unit 1702, where the second session modification message carries the subscribed UE AMBR of the UE; or
obtain the subscribed UE AMBR of the UE from an AMF entity or a UDM entity by using the transceiver unit 1702.

Optionally, the communications entity further includes the transceiver unit 1702.

The processing unit 1701 is further configured to: receive a session deletion message or a session deactivation message by using the transceiver unit 1702 before the communications entity obtains the authorized session AMBR of the session of the UE and the subscribed UE AMBR of the UE; and
obtain the authorized session AMBR of the session of the UE and the subscribed UE AMBR of the UE locally.

Optionally, the communications entity is UE, an AN node, an AMF entity, a PCF entity, or an N3IWF entity.

Optionally, when the communications entity is UE, an AMF entity, or a PCF entity, the processing unit 1701 is further configured to:
send the authorized UE AMBR of the UE to an AN node or an N3IWF entity by using the transceiver unit 1702.

Optionally, the subscribed UE AMBR of UE is a subscribed UE AMBR corresponding to an access technology type of the session.

For a specific method for determining a UE AMBR by using the communications entity shown in FIG. 17, refer to the foregoing descriptions. Details are not described herein again.

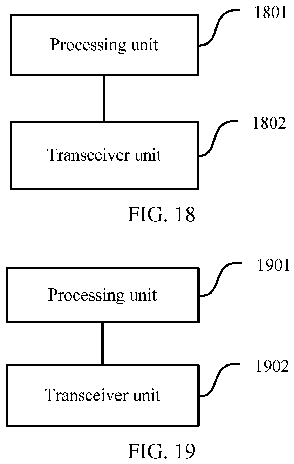

Based on a same invention conception, as shown in FIG. 18, this application further provides an SMF entity. The SMF entity may be configured to perform the method in the embodiment shown in FIG. 4, or the communications entity may be configured to perform the actions that are performed by the related device in the method embodiment shown in FIG. 7, FIG. 9, FIG. 11, or FIG. 13.

As shown in FIG. 18, the SMF entity includes at leat one processing unit 1801 and a transceiver unit 1802, and further, may include a storage unit and a bus.

The transceiver unit 1802 is configured to receive a subscribed session AMBR of a session of UE from a UDM entity.

The processing unit 1801 is configured to determine an authorized session AMBR of the session based on the subscribed session AMBR of the session.

The transceiver unit 1802 is further configured to send the authorized session AMBR of the session to a communications entity.

For the subscribed session AMBR, the authorized session AMBR, the authorized UE AMBR, and the like, refer to related descriptions in the embodiment shown in FIG. 3. Details are not described herein again.

Optionally, the processing unit 1801 is specifically configured to:
determine the authorized session AMBR of the session based on an authorization policy and the subscribed session AMBR of the session, where the authorization policy is a local authorization policy or an authorization policy obtained from a PCF entity; or
send the subscribed session AMBR of the session to a PCF entity, and receive the authorized session AMBR, of the session, sent by the PCF entity, where the authorized session AMBR of the session is determined by the PCF entity based on an authorization policy and the subscribed session AMBR of the session.

Optionally, the communications entity is UE, an AN node, an AMF entity, a PCF entity, or an N3IWF entity.

Based on a same invention conception, as shown in FIG. 19, this application further provides a PCF entity. The PCF entity may be configured to perform the method in the embodiment shown in FIG. 5, or the communications entity may be configured to perform the actions that are performed by the related device in the method embodiment shown in FIG. 7, FIG. 9, FIG. 11, or FIG. 13.

As shown in FIG. 19, the PCF entity includes at leat one processing unit 1901 and a transceiver unit 1902, and further, may include a storage unit and a bus.

The transceiver unit 1902 is configured to receive a subscribed session AMBR of a session of UE.

The processing unit 1901 is configured to determine an authorized session AMBR of the session based on an authorization policy and the subscribed session AMBR of the session.

The transceiver unit 1902 is further configured to send the authorized session AMBR of the session to a communications entity.

Optionally, the communications entity is UE, an AN node, an AMF entity, or an N3IWF entity.

For the subscribed session AMBR, the authorized session AMBR, the authorized UE AMBR, and the like, refer to related descriptions in the embodiment shown in FIG. 3. Details are not described herein again.

An embodiment of this application provides a computer readable storage medium. The computer readable storage medium stores a computer executable instruction. A processor of a communications entity (which may be an AN node, UE, an AMF entity, or a PCF entity) executes the computer executable instruction, so that the communications entity performs the steps that are performed by the communications entity in the foregoing methods provided in the embodiments of this application, or functional units corresponding to the steps are deployed on the communications entity.

An embodiment of this application provides a computer program product. The computer program product includes a computer executable instruction, and the computer executable instruction is stored in a computer readable storage medium. A processor of a communications entity may read the computer executable instruction from the computer readable storage medium. The processor executes the computer executable instruction, so that the communications entity performs the steps that are performed by the communications entity in the foregoing methods provided in the embodiments of this application, or functional units corresponding to the steps are deployed on the communications entity.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instruction is loaded and executed on the computer, the procedures or the functions according to the embodiments of the present invention are all or partially generated. The computer may be a general-purpose computer, a dedicated computer, a computer network, or another programmable apparatus. The computer instruction may be stored in the computer readable storage medium or transmitted from a computer readable storage medium to another computer readable storage medium. For example, the computer instruction may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

A person skilled in the art may further understand that the illustrative logical blocks (illustrative logical block) and the steps (step) listed in the embodiments of the present invention may be implemented by using electronic hardware, computer software, or a combination of the two. Whether the functions are implemented by using hardware or software depends on a particular application and a design requirement of an entire system. A person skilled in the art may use various methods to implement the functions for each particular application, but it should not be considered that the implementation goes beyond the protection scope of the embodiments of the present invention.

The various illustrative logical units and circuits described in the embodiments of the present invention may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors together with a digital signal processor core, or any other similar configuration.

The steps of the methods or algorithms described in the embodiments of the present invention may be directly embedded into hardware, a software unit executed by the processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium in any other form in the art. For example, the storage medium may be connected to the processor, so that the processor may read information from the storage medium and may write information to the storage medium. Alternatively, the storage medium may be integrated into the processor. The processor and the storage medium may be disposed in an ASIC, and the ASIC may be disposed in UE. Optionally, the processor and the storage medium may alternatively be disposed in different components of the UE.

In one or more example designs, the functions described in the embodiments of the present invention may be implemented by using hardware, software, firmware, or any combination thereof. If the functions are implemented by using software, the functions may be stored in a computer readable medium or be transmitted to the computer readable medium in a form of one or more instructions or code. The computer readable medium includes a computer storage medium and a communications medium that enables a computer program to move from one place to another place. The storage medium may be a usable medium that can be accessed by any general-purpose or special computer. For example, such a computer readable medium may include but is not limited to a RAM, a ROM, an EEPROM, a CD-ROM or another optical disc storage, a magnetic disk storage or another magnetic storage apparatus, or any other medium that may be used to carry or store program code. The program code is in a form of an instruction or a data structure or in a form that can be read by a general-purpose or special computer or by a general-purpose or special processor. In addition, any connection may be appropriately defined as a computer readable medium. For example, if software is transmitted from a website, a server, or another remote resource by using a coaxial cable, an optical fiber cable, a twisted pair, a digital subscriber line (DSL) or in a wireless manner, such as infrared, radio, or microwave, the software is also included in a defined computer readable medium. The disc (disk) and the magnetic disk (disc) include a compressed magnetic disk, a laser disk, an optical disc, a DVD, a floppy disk, and a Blu-ray disc. The magnetic disk generally copies data by a magnetic means, and the disc generally copies data optically by a laser means. The foregoing combination may also be included in the computer readable medium.

## Claims

1. An aggregate maximum bit rate AMBR determining method, comprising:
obtaining, by a communications entity, an authorized session AMBR of a session of user equipment UE and a subscribed UE AMBR of the UE, wherein the session is in an active state; and
determining, by the communications entity, an authorized UE AMBR of the UE based on the authorized session AMBR and the subscribed UE AMBR.

2. The method according to claim 1, wherein the obtaining, by a communications entity, an authorized session AMBR of a session of UE comprises:
receiving, by the communications entity, a session establishment message, wherein the session establishment message carries the authorized session AMBR of the session; or
receiving, by the communications entity, a first session modification message, wherein the first session modification message carries the authorized session AMBR of the session; or
receiving, by the communications entity, a session activation message, wherein the session activation message carries the authorized session AMBR of the session; or
obtaining, by the communications entity, the authorized session AMBR of the session of the UE locally.

3. The method according to claim 1 or 2, wherein the obtaining, by a communications entity, a subscribed UE AMBR of the UE comprises:
obtaining, by the communications entity, the subscribed UE AMBR of the UE locally; or
receiving, by the communications entity, a second session modification message, wherein the second session modification message carries the subscribed UE AMBR of the UE; or
obtaining, by the communications entity, the subscribed UE AMBR of the UE from an access and mobility management function AMF entity or a unified data management UDM entity.

4. The method according to claim 1, wherein before the obtaining, by a communications entity, an authorized session AMBR of a session of UE and a subscribed UE AMBR of the UE, the method further comprises:
receiving, by the communications entity, a session deletion message or a session deactivation message; and
the obtaining, by a communications entity, an authorized session AMBR of a session of UE and a subscribed UE AMBR of the UE comprises:
obtaining, by the communications entity, the authorized session AMBR of the session of the UE and the subscribed UE AMBR of the UE locally.

5. The method according to any one of claims 1 to 4, wherein the communications entity is UE, an access network AN node, an access and mobility management function AMF entity, a policy control function PCF entity, or a non-3GPP interworking function N3IWF entity.

6. The method according to claim 5, wherein when the communications entity is UE, an AMF entity, or a PCF entity, the method further comprises:
sending, by the communications entity, the authorized UE AMBR of the UE to an AN node or an N3IWF entity.

7. The method according to any one of claims 1 to 6, wherein the subscribed UE AMBR of the UE is a subscribed UE AMBR corresponding to an access technology type of the session.

8. An AMBR determining method, comprising:
receiving, by an SMF entity, a subscribed session AMBR of a session of UE from a unified data management UDM entity;
determining, by the SMF entity, an authorized session AMBR of the session based on the subscribed session AMBR of the session; and
sending, by the SMF entity, the authorized session AMBR of the session to a communications entity.

9. The method according to claim 8, wherein the determining, by the SMF entity, an authorized session AMBR of the session based on the subscribed session AMBR of the session comprises:
determining, by the SMF entity, the authorized session AMBR of the session based on an authorization policy and the subscribed session AMBR of the session, wherein the authorization policy is a local authorization policy or an authorization policy obtained from a PCF entity; or
sending, by the SMF entity, the subscribed session AMBR of the session to a PCF entity, and receiving the authorized session AMBR of the session, sent by the PCF entity, wherein the authorized session AMBR of the session is determined by the PCF entity based on an authorization policy and the subscribed session AMBR of the session.

10. The method according to claim 8 or 9, wherein the communications entity is UE, an AN node, an AMF entity, a PCF entity, or an N3IWF entity.

11. An AMBR determining method, comprising:
receiving, by a PCF entity, a subscribed session AMBR of a session of UE;
determining, by the PCF entity, an authorized session AMBR of the session based on an authorization policy and the subscribed session AMBR of the session; and
sending, by the PCF entity, the authorized session AMBR of the session to a communications entity.

12. The method according to claim 11, wherein
the communications entity is UE, an AN node, an AMF entity, or an N3IWF entity.

13. A communications entity, comprising:
a processor, configured to: obtain an authorized session AMBR of a session of user equipment UE and a subscribed UE AMBR of the UE, wherein the session is in an active state; and determine an authorized UE AMBR of the UE based on the authorized session AMBR and the subscribed UE AMBR.

14. The communications entity according to claim 13, wherein the communications entity further comprises a transceiver, and the processor is specifically configured to:
receive a session establishment message by using the transceiver, wherein the session establishment message carries the authorized session AMBR of the session; or
receive a first session modification message by using the transceiver, wherein the first session modification message carries the authorized session AMBR of the session; or
receive a session activation message by using the transceiver, wherein the session activation message carries the authorized session AMBR of the session; or
obtain the authorized session AMBR of the session of the UE locally.

15. The communications entity according to claim 13 or 14, wherein the processor is specifically configured to:
obtain the subscribed UE AMBR of the UE locally; or
receive a second session modification message by using the transceiver, wherein the second session modification message carries the subscribed UE AMBR of the UE; or
obtain the subscribed UE AMBR of the UE from an AMF entity or a UDM entity by using the transceiver.

16. The communications entity according to claim 13, wherein the communications entity further comprises a transceiver; and
the processor is further configured to: receive a session deletion message or a session deactivation message by using the transceiver before the communications entity obtains the authorized session AMBR of the session of the UE and the subscribed UE AMBR of the UE; and
obtain the authorized session AMBR of the session of the UE and the subscribed UE AMBR of the UE locally.

17. The communications entity according to any one of claims 13 to 16, wherein the communications entity is UE, an AN node, an AMF entity, a PCF entity, or an N3IWF entity.

18. The communications entity according to claim 17, wherein when the communications entity is UE, an AMF entity, or a PCF entity, the processor is further configured to:
send the authorized UE AMBR of the UE to an AN node or an N3IWF entity by using the transceiver.

19. The communications entity according to any one of claims 13 to 17, wherein the subscribed UE AMBR of the UE is a subscribed UE AMBR corresponding to an access technology type of the session.

20. An SMF entity, comprising:
a transceiver, configured to receive a subscribed session AMBR of a session of UE from a UDM entity; and
a processor, configured to determine an authorized session AMBR of the session based on the subscribed session AMBR of the session; wherein
the transceiver is further configured to send the authorized session AMBR of the session to a communications entity.

21. The SMF entity according to claim 20, wherein the processor is specifically configured to:
determine the authorized session AMBR of the session based on an authorization policy and the subscribed session AMBR of the session, wherein the authorization policy is a local authorization policy or an authorization policy obtained from a PCF entity; or
send the subscribed session AMBR of the session to a PCF entity, and receive the authorized session AMBR, of the session, sent by the PCF entity, wherein the authorized session AMBR of the session is determined by the PCF entity based on an authorization policy and the subscribed session AMBR of the session.

22. The SMF entity according to claim 20 or 21, wherein the communications entity is UE, an AN node, an AMF entity, a PCF entity, or an N3IWF entity.

23. A PCF entity, comprising:
a transceiver, configured to receive a subscribed session AMBR of a session of UE; and
a processor, configured to determine an authorized session AMBR of the session based on an authorization policy and the subscribed session AMBR of the session; wherein
the transceiver is further configured to send the authorized session AMBR of the session to a communications entity.

24. The PCF entity according to claim 23, wherein
the communications entity is UE, an AN node, an AMF entity, or an N3IWF entity.
